# EUROPÄISCHE PATENTSCHRIFT

(11) **EP 1 422 111 B1**
(45) Veröffentlichungstag und Bekanntmachung des Hinweises auf die Patenterteilung: **03.05.2006**
(21) Anmeldenummer: 03025953.5
(22) Anmeldetag: 13.11.2003
(51) Int. Cl.: B60R 21/00, B60K 31/00, B60Q 1/52, G05D 1/03

(54) **Verfahren und Vorrichtung zur Vorhersage des Fahrzeugverhaltens, sowie diesbezügliches Computer-Programm-Produkt**
Method and apparatus to predict vehicle dynamics and computer program relating thereto
Procédé et dispositif pour la prédiction de la dynamique de mouvement d'un véhicule et programme pour ordinateur correspondant

(30) Priorität: 22.11.2002 DE 10254525
(43) Veröffentlichungstag der Anmeldung: 26.05.2004
(73) Patentinhaber: AUDI AG, 85045 Ingolstadt (DE)
(72) Erfinder: Buschardt, Boris, 85049 Ingolstadt (DE); Zimmermann, Andreas, 80799 München (DE); Hofbauer, Manfred, 85092 Kösching (DE)
(74) Vertreter: Thielmann, Frank

(56) Entgegenhaltungen:
- EP-A- 0 736 414
- EP-A- 1 407 916

## Beschreibung

Die vorliegende Erfindung betrifft ein Verfahren zur Vorhersage des Fahrzeugverhaltens, sowie eine Vorrichtung zur Vorhersage des Fahrzeugverhaltens und ein diesbezügliches Computer-Programm-Produkt.

Ein Verfahren bzw. eine Vorrichtung nach dem Oberbegriff von Anspruch 1 bzw. 8 ist allgemein im Stand der Technik bekannt, siehe z.B. EP 736 414.

In modernen Fahrzeugen sind eine Vielzahl von Fahrerassistenzsystemen integriert, die den Fahrer beispielsweise auf Gefahrensituationen hinweisen sollen. Bekannte Systeme sind beispielsweise das Lane-Departure-Waming-System, bei dem der Fahrer gewarnt wird, wenn das Fahrzeug sich zu nahe an den Fahrbahnrand bewegt, oder das Heading-Control-System, bei dem die Spurhaltung unterstützt wird. Wird während einer Fahrt von dem Fahrer eine Kurve geschnitten, so erkennen diese Systeme das Verlassen der Fahrbahn bzw. das Verlassen der Spur und geben ein Warnsignal aus oder leiten Gegenmaßnahmen, wie beispielsweise Gegenlenkmaßnahmen, ein. Solche Warnsignale und Gegenmaßnahmen können, insbesondere bei gezieltem Kurvenschneiden durch den Fahrer, als störend empfunden werden. Um solche Störungen zu minimieren, differenzieren bekannte Systeme nach unterschiedlichen Fahrsituationen und reduzieren gegebenenfalls die Warnschwelle. Die Warnung wird beispielsweise bei Fahrsituationen, in denen das Fahrzeug sich häufig an den Rand der Fahrbahn begibt, erst bei einer Unterschreitung eines geringeren Abstandes zu dem Seitenrand ausgegeben. Dies führt jedoch im Gefahrenfall zu einer verspäteten Warnung und somit zu einer kleineren verbleibenden Zeitreserve für den Fahrer, um die Gefahrensituation zu beheben.

Aufgabe der vorliegenden Erfindung ist es daher, ein Verfahren und eine Vorrichtung zu schaffen, die das gezielte Vorhersagen des Fahrzeugverhaltens erlauben, damit eine Warnung oder eine Gegenmaßnahme nur bei tatsächlichen Gefahrensituationen ausgegeben bzw. eingeleitet wird.

Der Erfindung liegt die Erkenntnis zugrunde, dass diese Aufgabe ideal gelöst werden kann, indem für das Fahrzeug mindestens zwei Werte, die das Fahrzeugverhalten in der Zukunft widerspiegeln, ermittelt werden.

Die Aufgabe wird daher gelöst durch ein Verfahren zur Vorhersage des Fahrzeugverhaltens, bei dem das voraussichtliche Überfahren einer Fahrbahnbegrenzung ermittelt wird, wobei zusätzlich zu der Ermittlung eines voraussichtlich ersten Überfahrens der Fahrbahnbegrenzung mindestens ein voraussichtliches weiteres Überfahren der Fahrbahnbegrenzung ermittelt wird.

Als Fahrbahnbegrenzung werden im Sinne dieser Erfindung bevorzugt Straßenmarkierungen, insbesondere die Seitenstreifen einer Straße, verstanden.

Durch die Erkenntnis darüber, wann das Fahrzeug nach dem ersten Überfahren einer Fahrbahnbegrenzung ein weiteres mal die Fahrbahnbegrenzung überfahren wird, kann der Schluss gefolgert werden, ob das Fahrzeug sich in einer Kurvenfahrt befindet, bei der die Kurven geschnitten werden, oder ob es sich um ein ungewolltes Verlassen der Fahrbahn, beispielsweise aufgrund von Unachtsamkeit handelt.

Als Werte für das voraussichtliche Überfahren einer Fahrbahnbegrenzung wird vorzugsweise der sogenannte "Time-to-line-crossing"-Wert (TLC-Wert) verwendet, der Auskunft über die Zeit gibt, die bis zum Überfahren der Fahrbahnbegrenzung verbleibt. In einer Ausführungsform des erfindungsgemäßen Verfahrens werden mittels einer Datenverarbeitungseinheit mindestens zwei Werte für die Zeit bis zum Überfahren der Fahrbahnbegrenzung (TLC-Werte) berechnet. Aus diesen Werten werden dann zwei Werte ausgewählt und diese zwei ausgewählten Werte werden zumindest miteinander verarbeitet.

Es ist auch möglich statt der TLC-Werte, ortsabhängige Werte, wie beispielsweise die Strecke bis zum Überfahren der Fahrbahnbegrenzung zu berechnen. Hierbei können Strecken in einem rechtwinkligen Koordinatensystem oder Strecken auf der Bahnkurve verwendet werden.

Durch ein geeignetes Verfahren können aus berechneten Werten für mehrere Fahrbahnbegrenzungsüberfahrungen die beiden Werte ausgewählt werden, die die beiden, vom momentanen Zeitpunkt aus betrachtet, zeitlich nächsten Überfahrungen darstellen. Der erste Wert gibt dabei an, wie groß die verbleibende Zeitreserve bzw. Reststrecke ist, bis das Fahrzeug die Fahrbahn verlässt. Der zweite Wert gibt Auskunft über die Zeitdauer bzw. die Strecke, bis das Fahrzeug die Fahrbahnbegrenzung erneut überfährt und somit zurück auf die Fahrbahn fährt. Die sich daran anschließende Verarbeitung der Werte kann dazu dienen, ein Kurvenschneiden zu erkennen bzw. eine Gefahrensituation auszuschließen.

In einer Ausführungsform stellt die Verarbeitung der zwei ausgewählten Werte eine Differenzbildung dar. Über die Bestimmung der Differenz zwischen den beiden nächsten Fahrbahnüberschreitungen bzw. der Differenz der Zeiten, die bis zu diesen Fahrbahnüberschreitungen verbleiben, kann das Fahrzeugverhalten vorhergesagt werden.

Vorzugsweise stellt die Verarbeitung einen Vergleich mit mindestens einem Referenzwert dar. Dieser Vergleich kann entweder unmittelbar mit den errechneten und ausgewählten TLC-Werten oder ortsabhängigen Werten-erfolgen oder die aus diesen gebildete Differenz kann mit einem Referenzwert verglichen werden. Als Referenzwerte werden vorzugsweise Schwellwerte verwendet, bei deren Überschreiten davon ausgegangen werden muss, dass das erste Überfahren der Fahrbahnbegrenzung nicht beabsichtigt war. Insbesondere kann mittels dieser Schwellwerte erkannt werden, ob es sich bei dem voraussichtlichen Fahrzeugverhalten um Kurvenschneiden handelt.

Zusätzlich oder alternativ zu der Differenzbildung und dem Vergleich mit Referenzwerten kann zu den mindestens zwei Werten für die Zeit oder die Strecke bis zum Überfahren der Fahrbahnbegrenzung ein Wert der maximalen Querabweichung des Fahrzeugs in dem Zeitraum zwischen den zwei ausgewählten Werten bestimmt werden und dieser Wert der maximalen Querabweichung mit einem Referenzwert verglichen werden. Überschreitet das Fahrzeug innerhalb des Zeitraums, in dem es sich außerhalb der Fahrbahn befindet, nicht den festgelegten maximalen Querabweichungswert, so kann von einem kurzzeitigen Überschreiten der Fahrbahnbegrenzung ausgegangen werden.

In einer Ausführungsform werden die Werte für die Zeit bis zum Überfahren einer Fahrbahnbegrenzung über analytische oder numerische Schnittpunktberechnungen ermittelt. Der Fahrbahnverlauf und der voraussichtliche Spurverlauf des Fahrzeugs werden hierbei durch Modelle beschrieben, wobei als Modell für die Berechnung des Fahrbahnverlaufs ein Polynom eines Grades verwendet wird, der mindestens einen Grade höher ist als der des Polynoms, das als Modell für die Berechnung des Spurverlaufs des Fahrzeugs verwendet wird. Bevorzugt können auch Modelle verwendet werden, bei denen der Grad der beiden verwendeten Polynome gleich ist. Besonders bevorzugt ist mindestens eines der beiden Polynome ein Polynom eines Grades der größer als eins ist, dadurch kann sicher gestellt werden, dass die beiden Kurven, die durch die Polynome dargestellt werden, sich schneiden. Aufgrund dieser Modelle können bei einer analytischen oder numerischen Lösung der Schnittpunktberechnung zwischen den beiden Modellen zur Bestimmung der TLC-Werte oder ortsabhängiger Werte mehrere Lösungen existieren. Aus diesen Lösungen können durch Vergleich die Werte ausgewählt werden, die die nächsten beiden Fahrbahnüberschreitungen repräsentieren.

Vorzugsweise wird auf Basis des Ergebnisses der Vorhersage des Fahrzeugverhältens ein Warnsystem angesteuert. Diese Ansteuerung kann so ausgelegt sein, dass beim Erkennen eines kurzzeitigen Überschreitens der Fahrbahnbegrenzung das Fahrverhalten als normal erachtet wird und eine Warnung, die aufgrund der Näherung an die Fahrbahnbegrenzung normalerweise ausgelöst werden würde, unterdrückt oder beispielsweise bezüglich der Intensität verringert wird.

Die der Erfindung zugrunde liegende Aufgabe wird weiterhin durch eine Vorrichtung zur Vorhersage des Fahrzeugverhaltens gelöst, die zumindest eine Erkennungseinheit zur Erkennung des Fahrbahnverlaufs, zumindest eine Erkennungseinheit zur Erkennung der aktuellen Position des Fahrzeugs auf der Fahrbahn und mindestens eine Datenverarbeitungseinheit zur Berechnung von Werten für die voraussichtliche Fahrzeugposition im Verhältnis zu der Fahrbahn aufweist, wobei in der Datenverarbeitungseinheit zumindest eine Auswahleinheit vorgesehen ist, mittels derer Werte für die nächsten zwei Überfahrungen der Fahrbahnbegrenzung ausgewählt werden können.

Die Auswahleinheit kann beispielsweise eine Vergleichseinheit darstellen, in der die ermittelten Werte, die vorzugsweise TLC-Werte darstellen, miteinander bezüglich ihrer Vorzeichens und deren absoluter Werte verglichen werden. Sämtliche Einheiten der Vorrichtung können auch durch Programme dargestellt sein, die eine Verarbeitung der Daten erlauben.

Die Vorrichtung kann vorzugsweise zumindest eine Einheit zur Differenzbildung zwischen den ausgewählten Werten für die Zeit oder die Strecke bis zum Überfahren der Fahrbahnbegrenzung umfassen.

Besonders bevorzugt umfasst die Vorrichtung eine Speichereinheit, in der Referenzwerte gespeichert sind. Diese Referenzwerte, die Schwellwerte darstellen können, erlauben ein schnelles Erkennen von Gefahrensituationen und können je nach der Fahrsituation unterschiedlich sein. So können beispielsweise für Autobahnfahrten kleinere Referenzwerte gespeichert sein als für Landstraßenfahrten.

Die Vorrichtung kann weiterhin zumindest eine Berechnungseinheit zur Berechnung einer maximalen Querabweichung des Fahrzeugs in dem Zeitraum zwischen den ausgewählten Werten aufweisen.

Die Vorrichtung kann eine Vergleichseinheit zum Vergleich der ausgewählten Werte, einer aus diesen Werten gebildeten Differenz oder der berechneten maximalen Querabweichung des Fahrzeugs in dem Zeitraum zwischen den ausgewählten Werten mit mindestens einem Referenzwert aufweisen.

Vorzugsweise ist die erfindungsgemäße Vorrichtung so ausgelegt, dass diese zum Ausführen des erfindungsgemäßen Verfahrens geeignet ist.

Schließlich betrifft die Erfindung ein Computer-Programm-Produkt mit Programmcode zur Durchführung des erfindungsgemäßen Verfahrens, wenn das Programm auf einem Computer abläuft. Als Computer kommt beispielsweise der Micro-Computer des Steuergeräts eines Fahrerassistenzsystems in Betracht.

Merkmale und Details, die im Zusammenhang mit dem erfindungsgemäßen Verfahren beschrieben werden, gelten ebenso für die erfindungsgemäße Vorrichtung und das Computer-Programm-Produkt, sowie jeweils umgekehrt.

Die Erfindung wird im Folgenden anhand der beiliegenden Zeichnungen, die sich auf mögliche Ausführungsbeispiele der Erfindung beziehen, beschrieben. Es zeigen:
Figur 1: eine schematische Darstellung einer Ausführungsform einer erfindungsgemäßen Vorrichtung;
Figur 2: ein Flussdiagramm über den schematischen Ablauf mehrerer Ausführungsformen des erfindungsgemäßen Verfahrens; und
Figur 3: eine schematische Darstellung eines Berechnungsergebnisses nach einer Ausführungsform des erfindungsgemäßen Verfahrens.

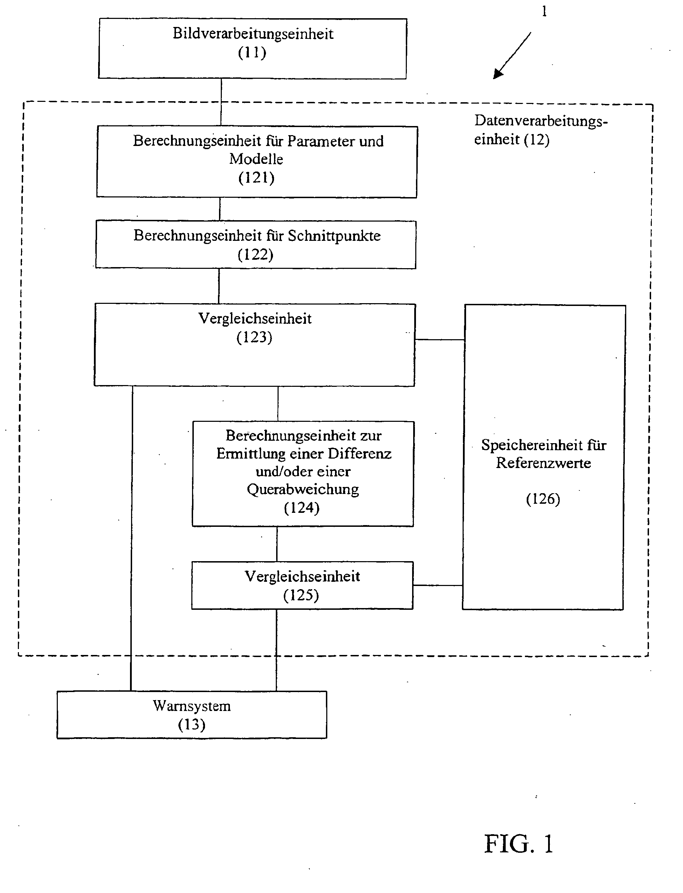

Gemäß Figur 1 umfasst die erfindungsgemäße Vorrichtung 1 in einer Ausführungsform eine Bildverarbeitungseinheit 11, eine Datenverarbeitungseinheit 12 und ein Warnsystem 13. In der Datenverarbeitungseinheit 12 sind eine Berechnungseinheit 121 für Parameter und Modelle, eine Berechnungseinheit 122 für Schnittpunkte, eine Vergleichseinheit 123, eine Berechnungseinheit 124 zur Ermittlung einer Differenz und/oder einer Querabweichung des Fahrzeugs, eine weitere Vergleichseinheit 125, sowie eine Speichereinheit 126 für Referenzwerte vorgesehen.

Die einzelnen Einheiten müssen nicht räumlich voneinander getrennt sein. Es ist möglich, dass sämtliche Einheiten der Datenverarbeitungseinheit 12 in einem Rechner zusammengefasst sind und jeweils durch Programme gebildet werden. Auch die Bildverarbeitungseinheit 11 kann mit der Datenverarbeitungseinheit 12 zusammengefasst sein.

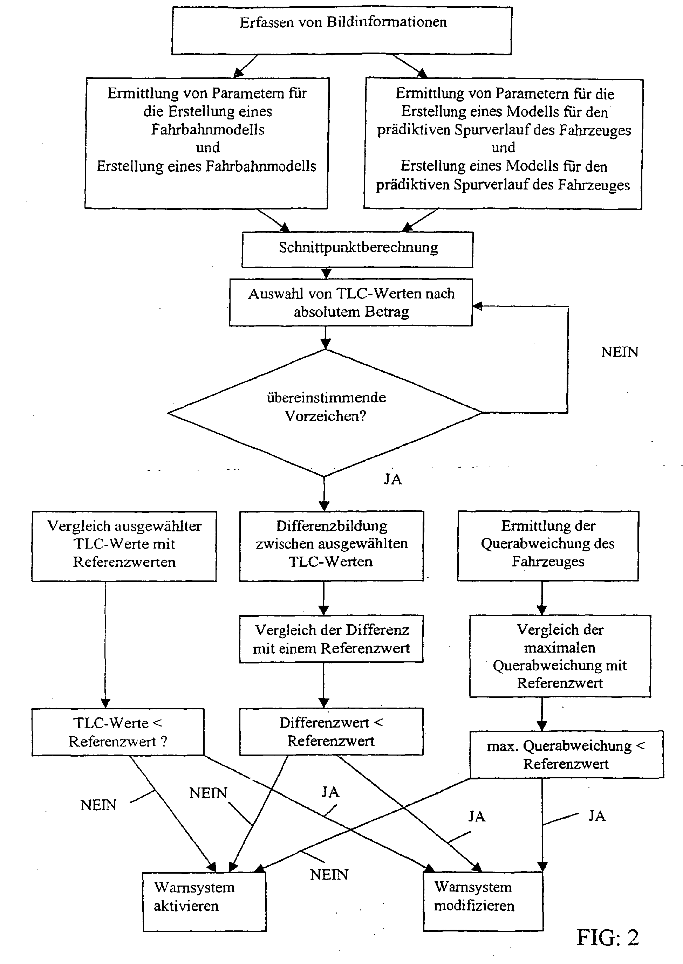

Die Funktionsweise der erfindungsgemäßen Vorrichtung 1 soll nun anhand des schematischen Flussdiagramms, das in Figur 2 gezeigt ist, erläutert werden.

Über die Bildverarbeitungseinheit 11 werden Bilder des Fahrbahnverlaufs und der Position des Fahrzeugs in Bezug auf den Fahrbahnverlauf aufgenommen. Aus diesen können in der Berechnungseinheit 121 für Parameter und Modelle zum einen Parameter für die Erstellung eines Fahrbahnmodells und zum anderen für die Erstellung eines Modells für den prädiktiven Spurverlauf des Fahrzeugs ermittelt werden. Mit Hilfe der aufgrund dieser Daten erstellten Modelle, werden somit der voraussichtliche Fahrbahnverlauf und der voraussichtliche Spurverlauf des Fahrzeugs ermittelt. Hierbei wird vorzugsweise als Modell für den Spurverlauf ein Polynom eines Grades gewählt, der einen Grad höher ist als der des Polynoms des Modells für den Fahrbahnverlauf. So können beispielsweise für die Beschreibung des Fahrbahnverlaufs bzw. der beiden Fahrbahnbegrenzungen ein Polynom 2., 3. oder höheren Grades und für die Beschreibung des prädiktiven Spurverlaufs des Fahrzeugs beispielsweise eine Geradengleichung, eine Kreisgleichung oder ein Polynom zugrunde gelegt werden.

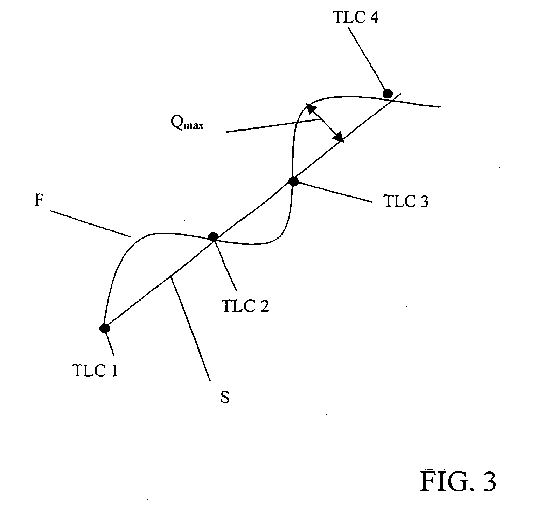

Aus diesen beiden Modellen werden nun die Schnittpunkte der berechneten Fahrbahn- und Spurverläufe ermittelt. Bei analytischer oder numerischer Lösung der Schnittpunktberechnung zur Bestimmung der TLC-Werte können mehrere Lösungen existieren. Diese sind in Figur 3 beispielhaft angegeben mit TLC1 bis TLC4, wobei S den berechneten Spurverlauf des Fahrzeugs und F den berechneten Fahrbahnverlauf bezeichnen. Für den Fall, dass zwei oder mehr Schnittpunkte existieren, werden in einem Auswahlverfahren die beiden Schnittpunkte ermittelt, die die nächsten beiden Fahrbahnüberfahrungen darstellen. Diese Auswahl erfolgt, indem zunächst die betragsmäßig kleinsten Werte der berechneten Schnittpunkte ausgewählt werden. Im nächsten Schritt werden die Werte bezüglich ihres Vorzeichens verglichen. Besitzen beide das gleiche Vorzeichen, so ist dies gleichbedeutend mit einem prädiktiven, zweimaligen Überfahren der gleichen Fahrbahnbegrenzung.

In den nun folgenden Schritten kann bestimmt werden, ob es sich bei der Fahrbahnüberfahrung um ein versehentliches Überfahren handelt, vor dem der Fahrer gewarnt werden sollte, oder ob es sich um ein Kurvenschneiden handelt, bei dem eine Warnung unterbleiben sollte.

Hierzu können die ausgewählten Werte unmittelbar mit Referenzwerten verglichen werden. Liegen die ausgewählten Werte unterhalb der Referenzwerte, die Schwellwerte darstellen, so kann von einem Kurvenschneiden ausgegangen werden und das Warnsystem kann modifiziert werden, damit der Fahrer nicht vor dem bevorstehenden Überfahren der Fahrbahnbegrenzung gewarnt wird.

Unter Modifizieren kann im Sinne dieser Erfindung das Deaktivieren der Warnanlage verstanden werden. Weiterhin kann unter Modifizieren das Unterdrücken der Ausgabe eines Warnsignals oder eine Reduktion der Intensität des auszugebenden Warnsignals verstanden werden. Anstelle der Ansteuerung eines Warnsystems kann gegebenenfalls auch eine Vorrichtung zum Einleiten von Gegenmaßnahmen angesteuert werden. Wird ein Kurvenschneiden erkannt, so kann die Einleitung der Gegenmaßnahmen durch das erfindungsgemäße Verfahren unterdrückt werden.

Alternativ zu dem unmittelbaren Vergleich mit Referenzwerten kann aus den ausgewählten zwei TLC-Werten eine Differenz gebildet werden, die dann wiederum mit einem Referenzwert, der einen Schwellwert für diese Differenz darstellt, verglichen werden kann. Auch hierbei wird das Warnsystem modifiziert, wenn der berechnete Differenzwert den Schwellwert nicht überschreitet und daher von einem kurzfristigen Verlassen der Fahrbahn auszugehen ist.

Weiterhin kann alternativ oder zusätzlich zu den bereits erläuterten Vergleichen mit Referenzwerten eine maximale Querabweichung (Qmax) des Fahrzeugs zwischen den berechneten und ausgewählten TLC-Werten auf der Basis der Fahrzeug- und Fahrbahn-Modellgleichungen ermittelt werden. Qmax ist in Figur 3 schematisch für den Zeitraum zwischen den Werten TLC3 und TLC4 angegeben. Dieser maximale Wert für die Querabweichung kann mit einem Referenzwert verglichen werden und erneut bei Erkennung des Unterschreitens des Schwellwerts das Warnsystem modifiziert werden.

Obwohl die Erfindung im wesentlichen in einer Ausführungsform beschrieben wurde, in der TLC-Werte zur Vorhersage verwendet wurden, liegt es aber selbstverständlich auch im Rahmen der Erfindung andere Werte, wie beispielsweise ortsabhängige, insbesondere Streckenwerte bis zum Überfahren der Fahrbahnbegrenzung für die Vorhersage zu verwenden. Das unter Bezugnahme auf die Figuren beschriebene Verfahren wird in diesen Fällen analog ausgeführt.

Die Erfindung ist nicht auf die dargestellten Ausführungsformen beschränkt.

Es ist auch möglich, zur Erhöhung der Zuverlässigkeit des Verfahrens den Vergleich der TLC-Werte mit Referenzwerten mit dem Vergleich der Differenz der TLC-Werte mit einem Referenzwert und/oder mit dem Vergleich der maximalen Querabweichung mit einem Referenzwert zu verbinden. Auch die Kombination des Vergleiches der maximalen Querabweichung mit einem Referenzwert und dem Vergleich der Differenz mit einem Referenzwert kann erfindungsgemäß verwendet werden.

Zusätzlich können weitere Einflussfaktoren, die einen Hinweis auf ein instabiles Fahrverhalten, wie beispielsweise die Gierrate, in die Vorhersage des Fahrverhaltens einbezogen werden.

Auch die Art der Ermittlung der Ausgangsparameter für die Modellbeschreibung ist nicht auf eine Bildverarbeitungseinheit beschränkt. Die Ausgangsparameter können auch über andere Arten von Sensoren erhalten werden.

Schließlich kann das erfindungsgemäße Verfahren in Zusammenhang mit einer Vielzahl von Fahrerassistenzsystem ausgeführt werden. So kann dieses beispielsweise mit Heading-Control- oder Lane-Departure-Warning-Systemen verbunden werden.

Vorzugsweise sind das erfindungsgemäße Verfahren und die erfindungsgemäße Vorrichtung so mit einem Fahrerassistenzsystem verbunden, dass das Verfahren nur dann eingeleitet wird, wenn das Fahrerassistenzsystem einen Fahrzustand erkennt, in dem eine Warnung ausgegeben oder eine Gegenmaßnahme eingeleitet werden würde. Wird durch das erfindungsgemäße Verfahren oder die erfindungsgemäße Vorrichtung erkannt, dass es sich nicht um eine Gefahrensituation handelt, so wird vorzugsweise die Ausgabe eines Warnsignals und die Einleitung der Gegenmaßnahmen für die nächsten zwei Fahrbahnbegrenzungsüberfahrungen unterdrückt.

Die erfindungsgemäße Vorrichtung kann in einem herkömmlichen Fahrerassistenzsystem integriert sein. Insbesondere können die Bildverarbeitungseinheit und das Warnsignal, sowie zumindest Teile der Datenverarbeitungseinheit eines herkömmlichen Fahrerassistenzsystems zur Ausführung des erfindungsgemäßen Verfahrens verwendet werden.

Durch das erfindungsgemäße Verfahren kann ein kurzfristiges beabsichtigtes Verlassen der Fahrbahn, wie beispielsweise im Fall des Kurvenschneidens, zuverlässig erkannt werden. Da in solchen Fällen die Warnung eines Fahrers über ein Warnsystem bei fehlender Gefahrensituation unterdrückt werden kann, können die Akzeptanz und der Komfort von Fahrerassistenzsystemen deutlich erhöht werden.

## Patentansprüche

1. Verfahren zur Vorhersage des Fahrzeugverhaltens, bei dem das voraussichtliche Überfahren einer Fahrbahnbegrenzung ermittelt wird, **dadurch gekennzeichnet, dass** zusätzlich zu der Ermittlung eines voraussichtlich ersten Überfahrens der Fahrbahnbegrenzung mindestens ein voraussichtliches weiteres Überfahren der Fahrbahnbegrenzung ermittelt wird.

2. Verfahren nach Anspruch 1, **dadurch gekennzeichnet, dass** mittels einer Datenverarbeitungseinheit 12 mindestens zwei Werte für die Zeit oder die Strecke bis zum Überfahren der Fahrbahnbegrenzung (TLC-Werte) berechnet werden, aus diesen Werten zwei Werte ausgewählt werden und diese zwei ausgewählten Werte zumindest miteinander verarbeitet werden.

3. Verfahren nach Anspruch 2, **dadurch gekennzeichnet, dass** die Verarbeitung der zwei ausgewählten Werte eine Differenzbildung umfasst.

4. Verfahren nach Anspruch 2 oder 3, **dadurch gekennzeichnet, dass** die Verarbeitung einen Vergleich mit mindestens einem Referenzwert umfasst.

5. Verfahren nach einem der Ansprüche 2 bis 4, **dadurch gekennzeichnet, dass** zusätzlich zu den mindestens zwei Werten für die Zeit (TLC-Wert) oder die Strecke bis zum Überfahren der Fahrbahnbegrenzung ein Wert der maximalen Querabweichung (Qmax) des Fahrzeugs in dem Zeitraum zwischen den zwei ausgewählten Werten bestimmt wird und dieser Wert der maximalen Querabweichung (Qmax) mit einem Referenzwert verglichen wird.

6. Verfahren nach einem der Ansprüche 1 bis 5, **dadurch gekennzeichnet, dass** der Fahrbahnverlauf und der voraussichtliche Spurverlauf des Fahrzeugs durch Modelle beschrieben werden, wobei als Modell für die Berechnung des Fahrbahnverlaufs ein Polynom eines Grades verwendet wird, der mindestens einen Grad höher ist als der des Polynoms, das als Modell für die Berechnung des Spurverlaufs des Fahrzeugs verwendet wird.

7. Verfahren nach einem der Ansprüche 1 bis 6, **dadurch gekennzeichnet, dass** auf der Basis des Ergebnisses der Vorhersage des Fahrzeugverhaltens ein Warnsystem (13) angesteuert wird.

8. Vorrichtung (1) zur Vorhersage des Fahrzeugverhaltens, die zumindest eine Erkennungseinheit (11) zur Erkennung des Fahrbahnverlaufs und zur Erkennung der aktuellen Position des Fahrzeugs auf der Fahrbahn und mindestens eine Datenverarbeitungseinheit (12) zur Berechnung von Werten für die voraussichtliche Fahrzeugposition im Verhältnis zu der Fahrbahn aufweist, **dadurch gekennzeichnet, daß** in der Datenverarbeitungseinheit (12) zumindest eine Auswahleinheit (123) vorgesehen ist, mittels derer Werte für die nächsten zwei Überfahrungen der Fahrbahnbegrenzung ausgewählt werden können.

9. Vorrichtung nach Anspruch 8, **dadurch gekennzeichnet, dass** die Vorrichtung (1) zumindest eine Einheit zur Differenzbildung (124) zwischen den ausgewählten Werten für die Zeit oder die Strecke bis zum Überfahren der Fahrbahnbegrenzung umfasst.

10. Vorrichtung nach einem der Ansprüche 8 oder 9, **dadurch gekennzeichnet, dass** die Vorrichtung 1 eine Speichereinheit (126) umfasst, in der Referenzwerte gespeichert sind.

11. Vorrichtung nach einem der Ansprüche 8 bis 10, **dadurch gekennzeichnet, dass** die Vorrichtung (1) zumindest eine Berechnungseinheit (124) zur Berechnung einer maximalen Querabweichung des Fahrzeugs in dem Zeitraum zwischen den ausgewählten Werten aufweist.

12. Vorrichtung nach Anspruch 10 oder 11, **dadurch gekennzeichnet, dass** diese eine Vergleichseinheit (123, 125) zum Vergleich der ausgewählten Werte, einer aus diesen Werten gebildeten Differenz oder der berechneten maximalen Querabweichung des Fahrzeugs in dem Zeitraum zwischen den ausgewählten Werten mit mindestens einem Referenzwert aufweist.

13. Vorrichtung nach einem der Ansprüche 8 bis 12, **dadurch gekennzeichnet, dass** diese zur Ausführung des Verfahrens nach einem der Ansprüche 1 bis 7 geeignet ist.

14. Computerprogramm-Produkt mit Programmcode zur Durchführung des Verfahrens nach einem der Ansprüche 1 bis 7 wenn das Programm auf einem Computer abläuft.

## Claims

1. Method for predicting the behaviour of a vehicle, in which the anticipated crossing of a traffic lane boundary is determined,
**characterised in that**, in addition to determining an anticipated first crossing of the traffic lane boundary, at least one further anticipated crossing of the traffic lane boundary is determined

2. Method according to claim 1, **characterised in that**, by means of a data processing unit 12, at least two values are calculated for the time or the distance to crossing of the traffic lane boundary (TLC values), two values are selected from these values, and these two values are processed at least with one another.

3. Method according to claim 2, **characterised in that** the processing of the two selected values includes a difference formation.

4. Method according to claim 2 or 3, **characterised in that** the processing includes a comparison with at least one reference value.

5. Method according to one of claims 2 to 4, **characterised in that**, in addition to the at least two values for the time (TLC value) or the distance to crossing of the traffic lane boundary, a value is determined for the maximum transverse deviation (Qmax) of the vehicle in the time interval between the two selected values, and this value of the maximum transverse deviation (Qmax) is compared with a reference value.

6. Method according to one of claims 1 to 5, **characterised in that** the course of the traffic lane and the anticipated course of the path of the vehicle are described by models, in which the model used for calculating the course of the traffic lane is a polynomial of a degree that is at least one degree higher than the polynomial that is used as a model for calculating the course of the path of the vehicle.

7. Method according to one of claims 1 to 6, **characterised in that** a warning system (13) is activated on the basis of the result of the prediction of the behaviour of the vehicle.

8. Apparatus (1) for predicting the behaviour of a vehicle which has at least one detector unit (11) for detecting the course of the traffic lane and for detecting the actual position of the vehicle on the traffic lane, and at least one data processing unit (12) for calculating values for the anticipated position of the vehicle in relation to the traffic lane, **characterised in that** at least one selector unit (123) is provided in the data processing unit (12) by means of which values for the next two crossings of the traffic lane boundary can be selected.

9. Apparatus according to claim 8, **characterised in that** the apparatus (1) includes at least one unit for difference formation (124) between the selected values for the time or the distance to crossing of the traffic lane boundary.

10. Apparatus according to one of claims 8 and 9,
**characterised in that** the apparatus 1 includes a memory unit (126) in which reference values are stored.

11. Apparatus according to one of claims 8 to 10, **characterised in that** the apparatus (1) has at least one calculation unit (124) for calculating a maximum transverse deviation of the vehicle in the time interval between the selected values.

12. Apparatus according to claim 10 or 11, **characterised in that** it has a comparator unit (123, 125) for comparing the selected values, a difference formed from these values, or the calculated maximum transverse deviation of the vehicle in the time interval between the selected values, with at least one reference value.

13. Apparatus according to one of claims 8 to 12, **characterised in that** it is suitable for carrying out the method according to one of claims 1 to 7.

14. Computer program product having a program code for carrying out the method according to one of claims 1 to 7 when the program is run on a computer.

## Revendications

1. Procédé pour la prédiction de comportement d'un véhicule, pour lequel le dépassement probable d'une limite de chaussée est transmis, **caractérisé en ce que**, en plus de la transmission d'un premier dépassement probable de la limite de chaussée, au moins un autre dépassement probable de la limite de chaussée est transmis.

2. Procédé selon la revendication 1, **caractérisé en ce qu'**une unité de traitement de données 12 permet de calculer au moins deux valeurs pour la période ou l'intervalle jusqu'au dépassement de la limite de chaussée (valeurs TLC), deux valeurs étant sélectionnées parmi ces valeurs et ces deux valeurs sélectionnées sont traitées au moins ensemble.

3. Procédé selon la revendication 2, **caractérisé en ce que** le traitement des deux valeurs sélectionnées comprend une soustraction.

4. Procédé selon la revendication 2 ou 3, **caractérisé en ce que** le traitement comprend une comparaison avec au moins une valeur de référence.

5. Procédé selon l'une des revendications 2 à 4,
**caractérisé en ce que**, en plus d'au moins deux valeurs pour la période (Valeurs TLC) ou l'intervalle jusqu'au dépassement de la limite de chaussée, une valeur de déviation latérale maximale (Qmax) du véhicule est déterminée dans le laps de temps entre les deux valeurs sélectionnées et cette valeur de la déviation latérale maximale (Qmax) est comparée à une valeur de référence.

6. Procédé selon l'une des revendications 1 à 5, **caractérisée en ce que** le tracé de la chaussée et le tracé probable de la voie du véhicule sont décrits par des modèles, sachant que comme modèle pour le calcul du tracé de la chaussée est utilisé un polynôme d'un degré, qui est au moins un degré supérieur à celui du polynôme qui est utilisé comme modèle pour le calcul du tracé de la voie du véhicule.

7. Procédé selon l'une des revendications 1 à 6, **caractérisé en ce qu'**un système d'alarme (13) est commandé sur la base du résultat de la prédiction du comportement d'un véhicule.

8. Dispositif (1) pour la prédiction du comportement d'un véhicule, qui comporte au moins une unité de reconnaissance (11) pour la reconnaissance du tracé de la chaussée et pour la reconnaissance de la position actuelle du véhicule sur la chaussée et au moins une unité de traitement des données (12) pour le calcul de valeurs pour la position probable du véhicule en rapport avec la chaussée, **caractérisé en ce qu'**au moins une unité de sélection (123) est prévue dans l'unité de traitement des données (12), au moyen de laquelle des valeurs peuvent être sélectionnées pour les deux prochains dépassements de la limite de chaussée.

9. Dispositif selon la revendication 8, **caractérisé en ce que** le dispositif (1) comprend au moins une unité pour la soustraction (124) entre les valeurs sélectionnées pour la période ou l'intervalle jusqu'au dépassement de la limite de chaussée.

10. Dispositif selon l'une des revendications 8 ou 9, **caractérisé en ce que** le dispositif (1) comprend une mémoire (126) dans laquelle sont stockées les valeurs de référence.

11. Dispositif selon l'une des revendications 8 à 10, **caractérisé en ce que** le dispositif (1) comporte au moins une unité de calcul (124) pour le calcul d'une déviation latérale maximale du véhicule dans le laps de temps entre les valeurs sélectionnées.

12. Dispositif selon la revendication 10 ou 11, **caractérisé en ce que** celui-ci comporte une unité de comparaison (123, 125) pour comparer les valeurs sélectionnées, une différence formée à partir de ces valeurs ou la déviation latérale maximale calculée du véhicule dans le laps de temps entre les valeurs sélectionnées avec au moins une valeur de référence.

13. Dispositif selon l'une des revendications 8 à 12, **caractérisé en ce que** celui-ci est approprié à la réalisation du procédé selon l'une des revendications 1 à 7.

14. Programme pour ordinateur avec code de programmation pour l'exécution du procédé selon l'une des revendications 1 à 7 lorsque le programme se déroule sur un ordinateur.
